# FASCICULE DE BREVET EUROPEEN

(11) **EP 0 472 799 B1**
(45) Date de publication et mention de la délivrance du brevet: **02.05.1997**
(21) Numéro de dépôt: 90810647.9
(22) Date de dépôt: 29.08.1990
(51) Int. Cl.: B01D 53/22, A61M 16/10, A61K 33/00

(54) **Dispositif por produire un mélange gazeux hypoxique**
Vorrichtung um eine hypoxische Gasmischung herzustellen
Apparatus for producing a hypoxic gaseous mixture

(43) Date de publication de la demande: 04.03.1992
(73) Titulaire: TRADOTEC S.A., 1214 Vernier (CH)
(72) Inventeur: Tkatchouk, Elena N., SU-103473 Moscow (SU); Tsyganova, Tatiana N., SU-105077 Moscow (SU); Murashov, Mikhail V., SU-127562 Moscow (SU); Ruprecht, Ernst, CH-1005 Lausanne (CH)
(74) Mandataire: Charbonnier, Georges R.

(56) Documents cités:
- EP-A- 0 108 426
- EP-A- 0 152 011
- EP-A- 0 185 980
- EP-A- 0 359 175
- US-A- 4 632 677
- SOVIET PATENTS ABSTRACTS, semaine 9037, 24 octobre 1990, section P/Q, classe P3, page 4, résumé no. 90-281207/37, Derwent Publications Ltd, Londres, GB; & SU-A-1 526 688 (PHYSIOL INST.) 07-12-1989
- SOVIET INVENTIONS ILLUSTRATED, semaine 8802, 24 février 1988, section Ch, classe B, page 6, résumé no. 88-012644/02, Derwent Publications Ltd, Londres, GB; & SU-A-1 313 444 (SVERD CHILD MOTHER) 30-05-1987
- SOVIET INVENTIONS ILLUSTRATED, semaine K26, 10 août 1983, section P/Q, classe P3, page 1, résumé no. J6747K/26, Derwent Publicatitions Ltd, Londres, GB; & SU-A-950 406 (MOTHER CHILD HEALTH) 15-08-1982
- SOVIET INVENTIONS ILLUSTRATED, semaine 8723, 22 juillet 1987, section Ch, classe B, page 2, résumé no. 87-161646/23, Derwent Publications Ltd, Londres, GB; & SU-A-1 264 949 (MOTHER CHILD HEALTH) 23-10-1986

## Description

L'invention a pour objet un appareil pour produire, à partir de l'air, un mélange gazeux hypoxique composé, en volume, de 8 à 18% d'oxygène et de 92 à 82% d'azote, mélange destiné à être utilisé principalement en médecine pour des traitements dits " hypoxiques ", mais aussi dans l'industrie chimiques.

On connait un procédé pour produire un tel mélange gazeux dans lequel on introduit de l'oxygène dans de l'azote pur comprimé à 120-150 atm. ( 1 atm. = 1,011375 bar ).

Le mélange gazeux ainsi obtenu comprend en volume entre 10 et 13% d'oxygène.

Pour mettre en oeuvre ce procédé, on utilise un appareil doté d'un conteneur étanche rempli d 'azote pur comprimé à 120-150 atm. , un injecteur pour introduire de l'oxygène dans ce conteneur, et un engrenage réducteur abaissant à 4 atm. la pression du mélange.

Les principaux inconvénients de ce procédé et de cet appareil résident :
- dans la médiocre qualité du mélange gazeux obtenu et la variation de sa concentration avec le temps, ce qui le rend impropre pour des traitements " hypoxiques ",
- dans le danger potentiel à haut risque que représente des conteneurs remplis d'azote comprimé à 120-150 atm.

Le but de la présente invention est la production d'un mélange gazeux hypoxique de haute qualité sans courir le risque évoqué ci-dessus.

Le document EP-A-0 359 175 décrit un procédé de séparation de gaz dans lequel on utilise une membrane en fibres creuses de polysulfone.

Ce procédé permet notamment d'extraire de l'azote de l'air en faisant passer de l'air comprimé entre 0,5 et 4 atm. à travers cette membrane.

Le document EP-A-0 185 980 décrit un appareil pour produire de l'air enrichi en oxygène comprenant une membrane composée de fibres creuses en poly-4-méthyl-pentene-1.

L'appareil selon l'invention comprend une source d'air comprimé et un boitier, pourvu d'orifices pour l'entrée de l'air comprimé et la sortie du mélange gazeux hypoxique, dans lequel est logé un dispositif comprenant des fibres creuses en poly-4-méthyl-pentene 1.

Cet appareil est caractérisé par le fait que ladite source fournit de l'air comprimé à une pression comprise entre 2,02265 bar ( 2 atm. ) et 10,1325 bar ( 10 atm. ) et que lesdites fibres ont des parois dont l'épaisseur est comprise entre 8 et 25 micromètres et un diamètre intérieur entre 10 et 30 micromètres.

Le mélange gazeux obtenu au moyen de cet appareil est d'une qualité exceptionnelle, en particulier sa concentration en oxygène est d'une très grande stabilité et il ne contient pratiquement aucune impureté.

En faisant varier la pression de l'air comprimé, le diamètre intérieur des fibres et l'épaisseur de leurs parois, on obtient un mélange gazeux hypoxique composé, en volume, de 8 à 18% d'oxygène et de 92 à 82% d'azote.

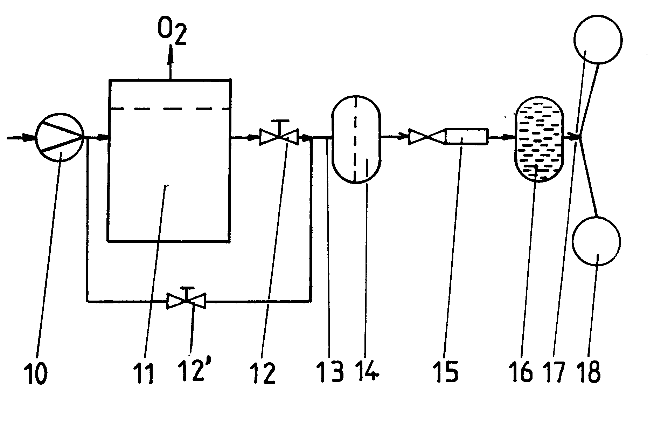

La figure unique du dessin ci-annexé représente schématiquement et à titre d'exemple une forme d'exécution de l'objet de l'invention destinée à des traitements hypoxiques.

L'appareil représenté au dessin est constitué par un compresseur à membrane 10, du type YK 402 M, comprimant de de l'air à une pression comprise entre 2 et 10 atmosphères ( 1 atmosphère = 1,011375 bar ), par un boitier 11 comportant un orifice d'entrée pour l'air comprimé et un orifice de sortie pour le mélange gazeux hypoxique, par un dispositif logé dans ce boitier 11 extrayant de l'oxygéne de l'air comprimé, par deux soupapes 12 et 12' permettant respectivement de régler le débit du mélange gazeux et sa concentration en oxygène, par une conduite 13, par un filtre 14, en tissu Petrianov, par un rotamètre 15, par un humidificateur 16, par un récepteur 17, et par un masque 18 pour le patient.

Ledit dispositif est constitué par une membrane formée d'un faisceau de fibres à polymères creuses en poly-4-méthyl-pentene 1.

Les parois de ces fibres ont une épaisseur comprise entre 8 et 25 micromètres et leur diamètre intérieur est compris entre 10 et 30 micromètres.

Le faisceau de fibres est fixé dans le boitier 11 par des blocs en matériau epoxy hermétique.

Cet appareil, dont le boitier 11 est maintenu à une température de 20 degrés centigrades, fonctionne comme suit :

De l'air composé en volume de 21% d'oxygène et de 79% d'azote, est comprimé dans le compresseur 10, à une pression comprise entre 2 et 10 atmosphères, puis cet air comprimé passe dans les fibres en poly-4-méthyl-pentene-1. Une certaine quantité d'oxygène traverse les parois de ces fibres et est évacuée.

Le mélange gazeux, appauvri en oxygène, traverse la soupape 12, la conduite 13, le filtre 14 qui retient les impuretés résiduelles, le rotamètre 15 qui assure une parfaite homogénéisation du mélange, l'humidificateur 16, et arrive enfin au récepteur 17 et au masque 18 du patient par lequel il est inhalé.

Ce mélange gazeux est composé en volume de 8 à 18% d'oxygène et de 92 à 82% d'azote selon la valeur de la pression de l'air à l'entrée du dispositif, du diamètre intérieur des fibres et de l'épaisseur de leurs parois.

La soupape 12' , qui est intercalé sur un by-pass, permet d'ajouter de l'air au mélange gazeux sortant du dispositif et d'ajuster très précisément sa concentration en oxygène à la valeur désirée.

Le tableau ci-après donne quelques exemples de mélanges gazeux obtenus par l'appareil en faisant varier la pression P de l'air comprimé, le diamètre intérieur D des fibres, et l ' épaisseur E de leurs parois.

| Exemple s | P (atm.) | D (micromètre) | E (micromètre) | Composition du gaz hypoxique | utilisation |
|---|---|---|---|---|---|
| 1 | 3 | 20 | 15 | 10% O 90% N | traitements hypoxiques |
| 2 | 10 | 10 | 8 | 8% O 92% N | idem |
| 3 | 2 | 30 | 25 | 18% O 82% N | idem |
| 4 | 1 | 20 | 15 | 20% O 80% N | thérapies non hypoxiques |
| 5 | 12 | 20 | 15 | --------- | aucune : membrane impropre |
| 1 atmosphère = 1,011375 bar | | | | | |

## Revendications

1. Appareil pour produire un mélange gazeux composé, en volume, de 8 à 18& d'oxygène et de 92 à 82% d'azote, en partant de l'air, comprenant une source d'air comprimé (10) et un boitier (11) pourvu d'orifices pour l'entrée de l'air comprimé et la sortie du mélange gazeux dans lequel est logé un dispositif comprenant des fibres creuses en poly-4-méthyl-pentene 1, caractérisé par le fait que ladite source (10) fournit de l'air comprimé à une pression comprise entre 2,02265 bar ( 2 atmosphères ) et 10,1325 bar ( 10atmosphères ) et que lesdites fibres ont des parois dont l'épaisseur est comprise entre 8 et 25 micromètres et un diamètre intérieur compris entre 10 et 30 micromètres.

2. Appareil selon la revendication 1, caractérisé par le fait que ladite source (10) est un compresseur à membrane.

3. Appareil selon la revendication 1, caractérisé par le fait qu'il comprend une soupape (12) permettant de régler le débit du mélange gazeux .

4. Appareil selon la revendication 3, caractérisé par le fait qu'il comprend une seconde soupape (12') montée sur un by-pass et permettant d'ajuster la concentration en oxygène et en azote du mélange gazeux.

5. Appareil selon la revendication 4, caractérisé par le fait qu'il comprend, en outre, un filtre (14), un rotamètre (15) et un humidificateur (16).

6. Appareil selon la revendication 5, destiné à des traitements hypoxiques, caractérisé par le fait qu'il comprend un masque (18) pour le patient.

## Claims

1. An apparatus for producing a gaseous mixture, composed of 8 to 18 % oxygen and 92 to 82 % nitrogen, by volume, on the basis of air, comprising a source of compressed air (10) and a vessel (11), which is provided with orifices for the inlet of compressed air and the outlet of the gaseous mixture, in which a device is disposed, comprising hollow fibres of poly-4-methyl pentene 1, characterized in that the source (10) supplies compressed air at a pressure of between 2.02265 bar (2 atmospheres) and 10.1325 bar (10 atmospheres) and that the fibres have walls with a thickness of between 8 and 25 micrometers and an inner diameter of between 10 and 30 micrometers.

2. An apparatus as claimed in claim 1, characterized in that the source is a membrane compressor.

3. An apparatus as claimed in claim 1, characterized in that it comprises a valve (12) which allows to control the flow rate of the gaseous mixture.

4. An apparatus as claimed in claim 3, characterized in that it comprises a second valve (12'), which is mounted on a by-pass and allows to adjust the oxygen and nitrogen concentration of the gaseous mixture.

5. An apparatus as claimed in claim 4, characterized in that it further comprises a filter (14), a rotameter (15) and a humidifier (16).

6. An apparatus as claimed in claim 5, serving for hypoxic treatments, characterized in that it comprises a mask (18) for the patient.

## Patentansprüche

1. Vorrichtung, um eine Gasmischung herzustellen, bestehend aus 8 bis 18 Vol.-% Sauerstoff und 92 bis 82 Vol.-% Stickstoff auf Basis von Luft, umfassend eine Druckluftquelle (10) und einen Behälter (11), der mit Öffnungen für den Einlaß von Druckluft und den Auslaß der Gasmischung versehen ist, in dem eine Vorrichtung angeordnet ist, die Hohlfasern aus Poly-4-Methyl-penten 1 umfaßt, dadurch gekennzeichnet, daß die Quelle (10) Druckluft mit einem Druck zwischen 2,02265 Bar (2 Atmosphären) und 10,1325 Bar (10 Atmosphären) liefert und daß die Fasern Wände haben, deren Dicke 8 bis 25 Mikrometer beträgt, sowie einen Innendurchmesser, der zwischen 10 und 30 Mikrometer beträgt.

2. Vorrichtung nach Anspruch 1, dadurch gekennzeichnet, daß die Quelle (10) ein Membrankompressor ist.

3. Vorrichtung nach Anspruch 1, dadurch gekennzeichnet, daß sie ein Ventil (12) umfaßt, welches die Regulierung des Durchflusses der Gasmischung ermöglicht.

4. Vorrichtung nach Anspruch 3, dadurch gekennzeichnet, daß sie ein zweites Ventil (12') umfaßt, das auf einem Umlauf montiert ist und die Einstellung der Sauerstoff- und Stickstoffkonzentration der Gasmischung ermöglicht.

5. Vorrichtung nach Anspruch 4, dadurch gekennzeichnet, daß sie ferner einen Filter (14), einen RotaDurchflußmesser (15) und einen Befeuchter (16) umfaßt.

6. Vorrichtung nach Anspruch 5, die für hypoxische Behandlungen bestimmt ist, dadurch gekennzeichnet, daß sie eine Maske (18) für den Patienten umfaßt.
